# EUROPÄISCHE PATENTSCHRIFT

(11) **EP 4 035 911 B1**
(45) Veröffentlichungstag und Bekanntmachung des Hinweises auf die Patenterteilung: **05.06.2024**
(21) Anmeldenummer: 21154115.6
(22) Anmeldetag: 28.01.2021
(51) Int. Cl.: B60D 5/00, B61D 17/20

(54) **BRÜCKE FÜR EINEN ÜBERGANG ZWISCHEN ZWEI GELENKIG MITEINANDER VERBUNDENEN FAHRZEUGTEILEN**
BRIDGE FOR A TRANSITION BETWEEN TWO VEHICLE SECTIONS WITH A JOINTED CONNECTION
PONT POUR UNE TRANSITION ENTRE DEUX PARTIES DE VÉHICULE RELIÉES DE MANIÈRE ARTICULÉE L'UNE À L'AUTRE

(43) Veröffentlichungstag der Anmeldung: 03.08.2022
(73) Patentinhaber: ULTIMATE Europe Transportation Equipment GmbH, 3304 St. Georgen am Ybbsfelde (AT); Teufl, Manfred, 3332 Rosenau (AT)
(72) Erfinder: Teufl, Manfred, 3332 Rosenau (AT)
(74) Vertreter: KLIMENT & HENHAPEL

(56) Entgegenhaltungen:
- EP-A1- 1 103 441
- EP-A1- 2 457 796
- EP-A1- 3 530 496
- CN-A- 101 638 098
- CN-U- 206 634 007
- KR-A- 20160 144 705

## Beschreibung

### GEBIET DER ERFINDUNG

Die vorliegende Erfindung betrifft eine Brücke für einen Übergang zwischen zwei gelenkig miteinander verbundenen Fahrzeugteilen, insbesondere eines Schienenfahrzeugs, wobei sich die Brücke in einer Durchgangsrichtung und einer darauf normal stehenden Breitenrichtung erstreckt, die Brücke umfassend zwei Bodenplatten, die jeweils zur gelenkigen Anordnung an einer Stirnseite der Fahrzeugteile vorgesehen sind und eine zumindest abschnittsweise begehbare Bodenplattenoberseite aufweisen, wobei in einer Höhenrichtung gesehen vor den Bodenplatten zumindest ein Kopplungselement, vorzugsweise zwei Kopplungselemente, vorgesehen ist/sind, wobei die Höhenrichtung normal auf die Durchgangsrichtung und die Breitenrichtung steht und von den Bodenplattenoberseiten weg weist.

### STAND DER TECHNIK

Brücken für Übergänge zwischen zwei gelenkig miteinander verbundenen Fahrzeugteilen, insbesondere eines Schienenfahrzeugs, sind an sich bekannt. Typischerweise umfassen diese Brücken zwei begehbare Bodenplatten, die an Stirnseiten der Fahrzeugteile gelenkig montiert sind, um einem im Fahrbetreib auftretenden Höhenversatz der Fahrzeugteile zueinander Rechnung tragen zu können.

Für den Fall, dass außerdem eine auf den Bodenplatten aufliegende Trittplatte vorgesehen ist, ist es aus der EP 2457796 B1 bekannt, auf einem mit der Trittplatte und den Stirnseiten der Fahrzeugteile verbundenen Zentrierglied Mittel zum Andrücken der Bodenplatten gegen die Trittplatte vorzusehen, um eine Spaltbildung zwischen der Trittplatte und den Bodenplatten bei Nick-, Wank- und Knickbewegungen bzw. überlagerten Bewegungen der Fahrzeugteile zueinander zu vermeiden.

Nachteilig an den bekannten Lösungen ist deren komplexe Konstruktion, nicht zuletzt aufgrund der Anbindung des Zentrierglieds an den Fahrzeugteilen, wobei relativ viele Teile verwendet werden, die den Herstellungsaufwand relativ groß und teuer machen.

Aus der EP 3 530 496 A1 ist eine Ausdehnungsvorrichtung für Paneele bekannt, die zur Bildung einer inneren Seitenwand zwischen zwei Wagenkästen dient, um flexibel auch möglichst kurze Abstände zwischen den Wagenkästen überbrücken zu können.

### AUFGABE DER ERFINDUNG

Es ist Aufgabe der vorliegenden Erfindung, eine Brücke vorzusehen, bei der die Bodenplatten auf konstruktiv möglichst einfache und kostengünstige Weise ideal auslenkbar sind, um zuverlässig sämtlichen Bewegungen der Fahrzeugteile zueinander, die im Fahrbetrieb typischerweise auftreten, folgen zu können. Weiters soll die erfindungsgemäße Lösung unabhängig davon sein, ob eine Trittplatte vorgesehen ist oder nicht.

### DARSTELLUNG DER ERFINDUNG

Zur Lösung der genannten Aufgabe ist es bei einer Brücke für einen Übergang zwischen zwei gelenkig miteinander verbundenen Fahrzeugteilen, insbesondere eines Schienenfahrzeugs, wobei sich die Brücke in einer Durchgangsrichtung und einer darauf normal stehenden Breitenrichtung erstreckt, die Brücke umfassend zwei Bodenplatten, die jeweils zur gelenkigen Anordnung an einer Stirnseite der Fahrzeugteile vorgesehen sind und eine zumindest abschnittsweise begehbare Bodenplattenoberseite aufweisen, wobei in einer Höhenrichtung gesehen vor den Bodenplatten zumindest ein Kopplungselement, vorzugsweise zwei Kopplungselemente, vorgesehen ist/sind, wobei die Höhenrichtung normal auf die Durchgangsrichtung und die Breitenrichtung steht und von den Bodenplattenoberseiten weg weist, erfindungsgemäß vorgesehen, dass das zumindest eine Kopplungselement, vorzugsweise die zwei Kopplungselemente, drehbeweglich mit den beiden Bodenplatten auf den Bodenplattenoberseiten gegenüberliegenden Bodenplattenunterseiten verbunden ist/sind, um bei einem Versatz der Fahrzeugteile parallel zur Höhenrichtung eine Auslenkung der Bodenplatten zu erzwingen, wobei das zumindest eine Kopplungselement nur indirekt, insbesondere über die Bodenplatten, mit den Fahrzeugteilen verbindbar ist.

Die Durchgangsrichtung könnte auch als erste Richtung bezeichnet werden, die Breitenrichtung als zweite Richtung und die Höhenrichtung als dritte Richtung, wobei die erste Richtung, die zweite Richtung und die dritte Richtung wechselseitig normal aufeinander stehen.

Die Brücke ist von einem Benutzer parallel zur Durchgangsrichtung begehbar, wobei "parallel" hier und im Folgenden auch die entgegengesetzte Richtung umfasst (d.h. die Brücke ist auch gegen die Durchgangsrichtung begehbar), sofern nicht explizit anderes angegeben ist.

Die Brücke kann sowohl ohne als auch mit Trittplatte vorgesehen sein. Wenn keine Trittplatte vorgesehen ist, erfolgt die Begehung typischerweise im Wesentlichen ausschließlich über die Bodenplattenoberseiten, wobei diese dann aber nicht zwangsläufig vollständig begehbar sein müssen, da die Bodenplatten abschnittsweise überlappen können. Wenn eine Trittplatte vorgesehen ist, erfolgt die Begehung typischerweise sowohl über die Bodenplattenoberseiten als auch über eine Trittplattenoberseite, wobei dann sowohl die Bodenplattenoberseiten als auch die Trittplattenoberseite zumindest abschnittsweise begehbar sein können und wobei es zu einer abschnittsweisen Überlappung von Trittplatte und Bodenplatten und umgekehrt kommen kann.

Die gelenkige Anordnung der Bodenplatten an den Stirnseiten der Fahrzeugteile kann in an sich bekannter Weise erfolgen, beispielsweise mittels Scharniere.

Die Bodenplatten, insbesondere die Bodenplattenoberseiten, können sowohl einteilig als auch mehrteilig aufgebaut sein.

Die Bodenplatten können z.B. aus Metall, umfassend insbesondere eine oder mehrere Aluminiumlegierungen, gefertigt sein.

Das mindestens eine Kopplungselement bzw. die Kopplungselemente können in an sich bekannter Weise unterschiedlichst ausgebildet sein. Beispielsweise kommen als Kopplungselemente Scherengitter und/oder Zahnstangen in Frage.

Das mindestens eine Kopplungselement kann z.B. aus Metall, umfassend insbesondere eine oder mehrere Aluminiumlegierungen, gefertigt sein.

Wie gesagt, sind vorzugsweise zwei Kopplungselemente vorgesehen, wobei auch mehr als zwei Kopplungselemente (also drei, vier etc.) vorgesehen sein können. Insbesondere wenn zwei Kopplungselemente vorgesehen sind, können diese in Durchgangsrichtung gesehen zu beiden Seite der Brücke angeordnet sein.

Die drehbeweglichen Verbindungen des mindestens einen Kopplungselements mit den beiden Bodenplatten schließt nicht aus, dass auch weitere Bewegungen durch die Verbindungen zugelassen sind. Die Verbindungen können so gestaltet sein, dass zumindest in einem gewissen Bereich lineare Bewegungen, insbesondere mit einem Richtungsanteil parallel zur Höhenrichtung, zugelassen sind. Beispielsweise kann eine Drehbeweglichkeit um eine zur Höhenrichtung parallele Drehachse und gleichzeitig eine lineare Beweglichkeit (in einem gewissen Bereich) parallel zur Höhenrichtung mittels eines Radiallagers mit zwei Freiheitsgraden realisiert sein. Solche Radiallager, die die Drehung um eine Drehachse sowie eine Translation entlang der Drehachse erlauben, sind an sich bekannt. Hier und im Folgenden sind unter "Radiallager" stets solche Radiallager mit zwei Freiheitsgraden zu verstehen, sofern nicht explizit anderes angegeben ist.

Der Vollständigkeit halber sei bemerkt, dass zumindest in einem gewissen Bereich auch lineare Bewegungen mit einem Richtungsanteil parallel zur Durchgangsrichtung und/oder mit einem Richtungsanteil parallel zur Breitenrichtung selbstverständlich denkbar sind.

Bei der geschilderten Brücke ist aufgrund der Kopplungselemente, die die beiden Bodenplatten miteinander koppeln, eine optimale Auslenkung der Bodenplatten gewährleistet, wenn die Fahrzeugteile im Fahrbetrieb Relativbewegungen zueinander durchführen, wobei die Relativbewegungen insbesondere einen Versatz parallel zur Höhenrichtung beinhalten können. Die optimale Auslenkung der Bodenplatten wiederum garantiert eine problemlose Begehbarkeit der Brücke auch bei den genannten Relativbewegungen bzw. Versetzungen der Fahrzeugteile zueinander.

Dass das zumindest eine Kopplungselement nur indirekt mit den Fahrzeugteilen verbindbar ist, bedeutet, dass das zumindest eine Kopplungselement für eine direkte Anbindung an die Fahrzeugteile, d.h. ohne ein oder mehrere zwischengeschaltete Elemente, nicht vorgesehen und entsprechend, insbesondere nur, für eine indirekte Anbindung/Verbindung ausgelegt ist. Unter Anbindung/Verbindung ist dabei nur eine solche zu verstehen, die eine signifikante mechanische Belastbarkeit mit Belastungen, wie sie im Betrieb des Übergangs typischerweise auftreten, aufweist.

Indem keine direkte Anbindung des mindestens einen Kopplungselements bzw. der Kopplungselemente an die Fahrzeugteile vorgesehen ist - sondern nur eine indirekte Anbindung, insbesondere über die Bodenplatten -, wird eine starke konstruktive Vereinfachung der Kopplungselemente als solche und der Brücke insgesamt ermöglicht. Zudem sind weit weniger Teile zur Herstellung der erfindungsgemäßen Brücke nötig als bei aus dem Stand der Technik bekannten Lösungen, weshalb die erfindungsgemäße Brücke auch kostengünstiger erzeugt werden kann.

Die Drehachse der drehbeweglichen Verbindung zwischen Kopplungselement und Bodenplatten kann prinzipiell beliebig gewählt sein. Darüberhinaus ist die Drehbeweglichkeit nicht notwendigerweise bloß auf eine Drehachse beschränkt, sondern kann mehrere oder sogar unendlich viele Drehachsen umfassen. Entsprechend ist es bei einer bevorzugten Ausführungsform der erfindungsgemäßen Brücke vorgesehen, dass zur drehbeweglichen Verbindung des mindestens einen Kopplungselements mit zumindest einer der Bodenplatten zumindest ein sphärisches Lager vorgesehen ist. Hierdurch werden im mathematischen Sinne Drehungen um unendlich viele Drehachsen ermöglicht, was insbesondere bei quer zur Höhenrichtung verlaufenden Relativbewegungen der Fahrzeugteile zueinander eine optimale Beweglichkeit zwischen dem zumindest einen Kopplungselement und den Bodenplatten und damit eine optimale Auslenkung der Bodenplatten sicherstellt.

In der Praxis genügt es, wenn das Kopplungselement bzw. die Kopplungselemente nur mit einer der Bodenplatten über ein sphärisches Lager verbunden sind, um eine hinreichende Beweglichkeit zwischen den verbundenen Elementen und damit eine optimale Auslenkung der Bodenplatten sicherzustellen. Die Verbindung zur anderen Bodenplatte kann dann z.B. über ein einfaches Drehlager (mit genau einem Freiheitsgrad, nämlich der Rotation um genau eine Drehachse) oder ein Radiallager hergestellt sein. Neben Kostenvorteilen können sich hierbei auch Vorteile hinsichtlich der Stabilität der resultierenden Anordnung der Bodenplatten ergeben. Selbstverständlich kann aber auch vorgesehen sein, dass das mindestens eine Kopplungselement, vorzugsweise die Kopplungselemente, mit beiden Bodenplatten über sphärische Lager verbunden ist/sind, womit ein Maximum an Beweglichkeit zwischen den verbundenen Elementen gewährleistet ist.

Bei einer bevorzugten Ausführungsform der erfindungsgemäßen Brücke ist vorgesehen, dass das mindestens eine Kopplungselement zumindest einen Gleitkörper, vorzugsweise aus Kunststoff, aufweist, auf welchem Gleitkörper zumindest eine der Bodenplattenunterseiten gleitbar aufliegt. Hierdurch wird zum einen eine Unterstützung der jeweiligen Bodenplatte durch das mindestens eine Kopplungselement ermöglicht, was die Stabilität bei Begehung der Brücke erhöht. Zum anderen wird gleichzeitig ein problemloses Abgleiten der jeweiligen Bodenplatte gegenüber zumindest einem Abschnitt des mindestens einen Kopplungselements ermöglicht, insbesondere wenn es zu Relativbewegungen der Fahrzeugteile zueinander, vorzugsweise parallel zur Höhenrichtung, kommt.

Kunststoffe mit geeigneten Gleiteigenschaften sind an sich bekannt, beispielsweise Polytetrafluorethylen.

Wie bereits erwähnt, kann die erfindungsgemäße Brücke ohne oder mit Trittplatte ausgeführt sein. Insbesondere wenn relativ große Abstände zwischen den Fahrzeugteilen mit der Brücke überbrückt werden müssen, kann sich eine Trittplatte als günstig erweisen. Entsprechend ist es bei einer bevorzugten Ausführungsform der erfindungsgemäßen Brücke vorgesehen, dass die Brücke eine Trittplatte mit einer zumindest abschnittsweise begehbaren Trittplattenoberseite umfasst, wobei parallel zur Höhenrichtung gesehen die Trittplatte zumindest abschnittsweise zwischen den Bodenplatten angeordnet ist, wobei das mindestens eine Kopplungselement zur Zentrierung der Trittplatte drehbeweglich mit der Trittplatte auf einer der Trittplattenoberseite gegenüberliegenden Trittplattenunterseite verbunden ist.

Die genannte Anordnung der Trittplatte relativ zu den Bodenplatten - mit Blick in Höhenrichtung sind zumindest ein Abschnitt der einen Bodenplatte, zumindest ein Abschnitt der Trittplatte und zumindest ein Abschnitt der anderen Bodenplatte nebeneinander sichtbar - lässt sich unterschiedlich realisieren: Die Trittplatte kann "über" den Bodenplatten angeordnet sein, d.h. in Höhenrichtung gesehen ist die Trittplatte hinter den Bodenplatten angeordnet; die Trittplatte kann "unter" den Bodenplatten angeordnet sein, d.h. in Höhenrichtung gesehen ist die Trittplatte vor den Bodenplatten angeordnet; die Trittplatte kann in Höhenrichtung gesehen hinter der einen der beiden Bodenplatten und vor der anderen der beiden Bodenplatten angeordnet sein.

Das mindestens eine Kopplungselement fungiert bei dieser Ausführungsform auch als Zentrierelement für die Trittplatte.

Die drehbewegliche Verbindung des mindestens einen Kopplungselements mit der Trittplatte erlaubt dabei insbesondere, einen lateralen Versatz der Fahrzeugteile zueinander (d.h. in einer Ebene normal auf die Höhenrichtung bzw. parallel zur Durchgangsrichtung und/oder zur Breitenrichtung) ausgleichen zu können. Die Zentrierung der Trittplatte garantiert wiederum eine problemlose Begehbarkeit der Brücke über die Trittplatte auch bei den genannten Relativbewegungen bzw. Versetzungen der Fahrzeugteile zueinander. Insbesondere können so Spalte bzw. Lücken zwischen den Bodenplatten und der Trittplatte vermieden werden.

Die genannte Drehbeweglichkeit kann dabei beispielsweise mittels eines Drehlagers, das die Rotation um eine einzige Drehachse erlaubt, oder mittels eines Radiallagers erreicht werden. Diese einzige Drehachse kann z.B. normal auf die Trittplattenunterseite stehen.

Es sind aber natürlich auch drehbewegliche Verbindungen denkbar, die Rotationen um mehr als eine einzige Drehachse erlauben, beispielsweise sphärische Lager.

Gemäß dem oben Gesagten ist es bei einer besonders bevorzugten Ausführungsform der erfindungsgemäßen Brücke vorgesehen, dass die Trittplatte in Höhenrichtung gesehen vor den Bodenplatten angeordnet ist, wobei die Bodenplatten auf der Trittplattenoberseite, insbesondere gleitbar, aufliegen. D.h. die Trittplatte ist in diesem Fall unter den Bodenplatten angeordnet. Die Bodenplattenunterseiten und/oder die Trittplattenoberseite können zu diesem Zweck jeweils einen eigenen Auflageabschnitt aufweisen, der, beispielsweise durch Ausbildung aus einem geeigneten Material oder durch eine geeignete Beschichtung (z.B. aus Polytetrafluorethylen), ein problemloses Abgleiten der Bodenplatten auf der Trittplatte gewährleistet.

Gemäß dem oben Gesagten ist es bei einer alternativen besonders bevorzugten Ausführungsform der erfindungsgemäßen Brücke vorgesehen, dass die Trittplatte in Höhenrichtung gesehen hinter den Bodenplatten angeordnet ist, wobei die Trittplatte auf den Bodenplattenoberseiten, insbesondere gleitbar, aufliegt. D.h. die Trittplatte ist in diesem Fall über den Bodenplatten angeordnet. Die Bodenplattenoberseiten und/oder die Trittplattenunterseite können zu diesem Zweck jeweils einen eigenen Auflageabschnitt aufweisen, der, beispielsweise durch Ausbildung aus einem geeigneten Material oder durch eine geeignete Beschichtung (z.B. aus Polytetrafluorethylen), ein problemloses Abgleiten der Trittplatte auf den Bodenplatten gewährleistet.

Bei einer besonders bevorzugten Ausführungsform der erfindungsgemäßen Brücke ist vorgesehen, dass das mindestens eine Kopplungselement mindestens einen Gleitkörper, vorzugsweise aus Kunststoff, aufweist, auf welchem Gleitkörper die Trittplattenunterseite gleitbar aufliegt. Hierdurch wird zum einen eine Unterstützung der Trittplatte durch das mindestens eine Kopplungselement ermöglicht, was die Stabilität bei Begehung der Brücke erhöht. Zum anderen wird gleichzeitig ein problemloses Abgleiten der Trittplatte gegenüber zumindest einem Abschnitt des mindestens einen Kopplungselements ermöglicht, insbesondere wenn es zu, vorzugsweise lateralen, Relativbewegungen der Fahrzeugteile zueinander kommt.

Kunststoffe mit geeigneten Gleiteigenschaften sind an sich bekannt, beispielsweise Polytetrafluorethylen.

Wie bereits erwähnt, kann das mindestens eine Kopplungselement auf unterschiedlichste Arten ausgebildet sein. Bei einer bevorzugten Ausführungsform der erfindungsgemäßen Brücke ist vorgesehen, dass das mindestens eine Kopplungselement durch mindestens ein Scherengitter ausgebildet ist. Das Scherengitter kann dabei als einfache Schere oder mehrfache Schere ausgebildet sein. Mit dem Scherengitter kann eine sichere Verbindung der Bodenplatten erzielt werden, insbesondere bei - auch relativ großen - Bewegungen der Bodenplatten zueinander, die sowohl Richtungsanteile parallel zur Durchgangsrichtung aufweisen als auch Richtungsanteile parallel zur Breitenrichtung.

Bei mehreren Kopplungselementen kann vorgesehen sein, dass ein oder mehrere der Kopplungselemente oder sämtliche Kopplungselemente als Scherengitter ausgebildet sind.

Analog zum oben Gesagten ist erfindungsgemäß ein System vorgesehen, umfassend einen ersten Fahrzeugteil und einen zweiten Fahrzeugteil, wobei die beiden Fahrzeugteile gelenkig miteinander verbunden sind und zwischen den Fahrzeugteilen ein Übergang mit einer erfindungsgemäßen Brücke vorgesehen ist, wobei das mindestens eine Kopplungselement nur indirekt, insbesondere über die Bodenplatten, mit den Fahrzeugteilen verbunden ist. Bei dem ersten Fahrzeugteil und dem zweiten Fahrzeugteil kann es sich um Fahrzeugteile eines Schienenfahrzeugs handeln.

Bei einer bevorzugten Ausführungsform des erfindungsgemäßen Systems ist vorgesehen, dass zur gelenkigen Anordnung der Bodenplatten an den Stirnseiten der Fahrzeugteile Scharniere vorgesehen sind. Hierdurch wird eine einfache, kostengünstige und stabile Anbindung gewährleistet, sodass die Bodenplatten nach oben und/oder unten gegenüber dem jeweiligen Fahrzeugteil verschwenkt werden können. Verschwenkt wird dabei um Scharnierachsen, die, wenn die Fahrzeugteile keinerlei Versatz zueinander aufweisen, vorzugsweise parallel zur Breitenrichtung verlaufen.

### KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine axonometrische Darstellung eines ersten Ausführungsbeispiels einer erfindungsgemäßen Brücke von oben
- Fig. 2: eine axonometrische Darstellung der Brücke aus Fig. 1 von unten
- Fig. 3: eine Schnittansicht der Brücke aus Fig. 1, wobei die Schnittebene parallel zu einer Durchgangsrichtung und zu einer Höhenrichtung ist
- Fig. 4: eine axonometrische Darstellung eines zweiten Ausführungsbeispiels der erfindungsgemäßen Brücke von oben
- Fig. 5: eine axonometrische Darstellung der Brücke aus Fig. 4 von unten
- Fig. 6: eine Schnittansicht der Brücke aus Fig. 4, wobei die Schnittebene parallel zur Durchgangsrichtung und zur Höhenrichtung ist
- Fig. 7: eine axonometrische Darstellung eines dritten Ausführungsbeispiels der erfindungsgemäßen Brücke von oben
- Fig. 8: eine axonometrische Darstellung der Brücke aus Fig. 7 von unten
- Fig. 9: eine Schnittansicht der Brücke aus Fig. 7, wobei die Schnittebene parallel zur Durchgangsrichtung und zur Höhenrichtung ist

### WEGE ZUR AUSFÜHRUNG DER ERFINDUNG

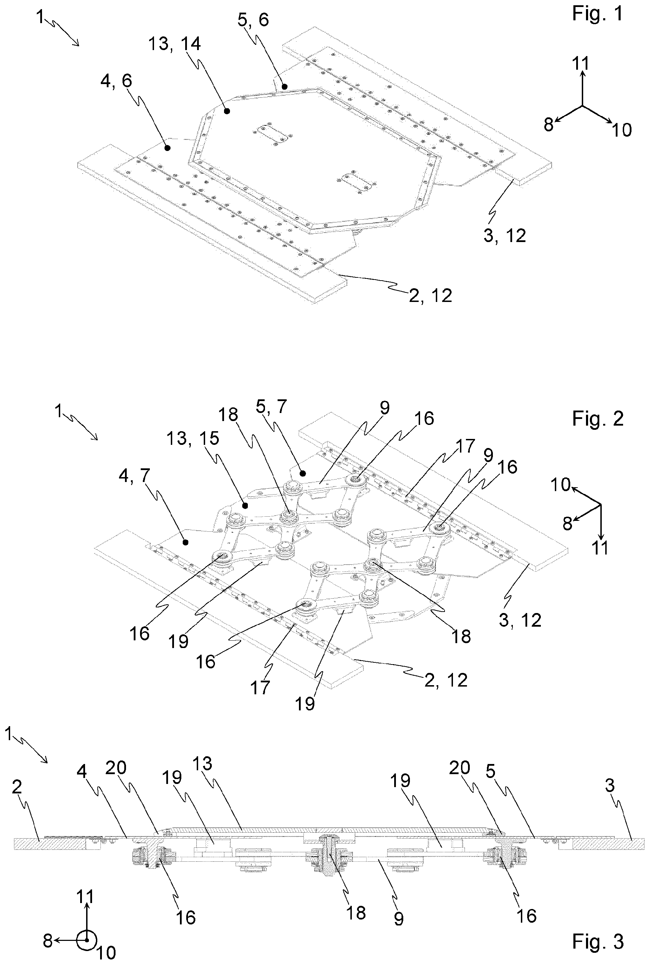

Fig. 1 zeigt in einer axonometrischen Darstellung von oben ein erstes Ausführungsbeispiel einer erfindungsgemäßen Brücke 1 für einen Übergang zwischen einem ersten Fahrzeugteil 2 und einem zweiten Fahrzeugteil 3 eines Schienenfahrzeugs, wobei die Fahrzeugteile 2, 3 gelenkig miteinander verbunden sind und wobei aus Klarheitsgründen nur Abschnitte der Stirnseiten 12 der Fahrzeugteile 2, 3 dargestellt sind. Die Fahrzeugteile 2, 3 und die Brücke 1 sind Teile eines erfindungsgemäßen Systems.

Die Brücke 1 erstreckt sich in einer Durchgangsrichtung 8 und einer darauf normal stehenden Breitenrichtung 10. Eine Höhenrichtung 11 steht normal sowohl auf die Durchgangsrichtung 8 als auch auf die Breitenrichtung 10.

Die Brücke 1 umfasst eine erste Bodenplatte 4, die über ein Scharnier 17, vgl. Fig. 2, gelenkig mit dem ersten Fahrzeugteil 2 verbunden und an dessen Stirnseite 12 angeordnet ist, sodass die erste Bodenplatte 4 "nach oben" (d.h. in Höhenrichtung 11) oder "nach unten" (d.h. gegen die Höhenrichtung 11) schwenken kann. Weiters umfasst die Brücke 1 eine zweite Bodenplatte 5, die ebenfalls über ein Scharnier 17, vgl. Fig. 2, gelenkig mit dem zweiten Fahrzeugteil 3 verbunden und an dessen Stirnseite 12 angeordnet ist, sodass die zweite Bodenplatte 5 ebenfalls nach oben oder nach unten schwenken kann.

Die Bodenplatten 4, 5 weisen jeweils eine Bodenplattenoberseite 6 auf, die zumindest abschnittsweise von einem Benutzer begehbar ist, wenn der Benutzer den Übergang mit einer Richtungskomponente parallel zur Durchgangsrichtung 8 durchschreitet. Die Höhenrichtung 11 weist von den Bodenplattenoberseiten 6 weg.

Sowohl in Fig. 2 als auch in der Schnittansicht der Fig. 3 ist gut erkennbar, dass unter den Bodenplatten 4, 5, d.h. in Höhenrichtung 11 gesehen vor den Bodenplatten 4, 5, zwei als Scherengitter 9 ausgeführte Kopplungselemente vorgesehen bzw. angeordnet sind. Die Scherengitter 9 sind in Durchgangsrichtung 8 gesehen zu beiden Seiten des Übergangs angeordnet.

Jedes der Scherengitter 9 ist sowohl mit der ersten Bodenplatte 4 als auch mit der zweiten Bodenplatte 5, genauer mit Bodenplattenunterseiten 7 der Bodenplatten 4, 5, jeweils drehbeweglich verbunden. Insbesondere im Fahrbetrieb kann es zu einem Versatz der Fahrzeugteile 2, 3 parallel zur Höhenrichtung 11 kommen. Die Scherengitter 9 erzwingen bei einem solchen Versatz eine Auslenkung bzw. Verschwenkung der Bodenplatten 4, 5, wodurch die ungehinderte Begehbarkeit des Übergangs gewährleistet bleibt.

Über die erste Bodenplatte 4 sind die Scherengitter 9 indirekt mit dem ersten Fahrzeugteil 2 verbunden. Über die zweite Bodenplatte 5 sind die Scherengitter 9 indirekt mit dem zweiten Fahrzeugteil 3 verbunden. Eine direkte Verbindung der Scherengitter 9 zu den Fahrzeugteilen 2, 3 existiert nicht.

Beim gezeigten ersten Ausführungsbeispiel der erfindungsgemäßen Brücke 1 sind sowohl zur drehbeweglichen Verbindung der Scherengitter 9 mit der ersten Bodenplatte 4 als auch zur drehbeweglichen Verbindung der Scherengitter 9 mit der zweiten Bodenplatte 5 sphärische Lager 16 vorgesehen.

Die Scherengitter 9 können jeweils ziehharmonikaartig auseinander und zusammen geschoben werden, womit unterschiedlichsten Relativbewegungen der Fahrzeugteile 2, 3 zueinander mit Richtungsanteilen parallel zur Durchgangsrichtung 8 und/oder zur Breitenrichtung 10 und/oder zur Höhenrichtung 11 Rechnung getragen werden kann. Wie in Fig. 2 und Fig. 3 zu erkennen ist, können dabei die Bodenplattenunterseiten 7 der Bodenplatten 4, 5 auf Gleitkörpern 19 abgleiten, die an den Scherengittern 9 befestigt sind. Die Bodenplattenunterseiten 7 liegen dabei auf den Gleitkörpern 19 auf, sodass die Scherengitter 9 die Bodenplatten 4, 5 abstützen und die Stabilität der Brücke 1 bzw. des Übergangs erhöhen.

Die Gleitkörper 19 sind in den dargestellten Ausführungsbeispielen aus Kunststoff gefertigt. Die Bodenplatten 4, 5 sowie die Scherengitter 9 sind in den dargestellten Ausführungsbeispielen aus Metall, vorzugsweise aus einer Aluminiumlegierung, gefertigt.

Beim gezeigten ersten Ausführungsbeispiel weist die Brücke 1 zusätzlich zu den Bodenplatten 4, 5 auch eine Trittplatte 13 mit einer zumindest abschnittsweise begehbaren Trittplattenoberseite 14 auf. Im ersten Ausführungsbeispiel ist diese Trittplatte 13 in Höhenrichtung 11 gesehen hinter den Bodenplatten 4, 5 angeordnet, wobei die Trittplatte 13 mit Auflageabschnitten 20 auf den Bodenplattenoberseiten 6 gleitbar aufliegt, vgl. Fig. 3. Die Auflageabschnitte 20 sind zur Verbesserung der Gleiteigenschaften aus einem hierfür geeigneten Kunststoff gefertigt.

Wie sowohl in Fig. 1 als auch in Fig. 2 erkennbar ist, ist parallel zur Höhenrichtung 11 gesehen die Trittplatte 13 zumindest abschnittsweise zwischen den Bodenplatten 4, 5 angeordnet bzw. sind parallel zur Höhenrichtung 11 gesehen Abschnitte der ersten Bodenplatte 4, der Trittplatte 13 und der zweiten Bodenplatte 5 nebeneinander angeordnet.

Wie insbesondere aus Fig. 2 hervorgeht, sind beide Scherengitter 9 mit einer der Trittplattenoberseite 14 gegenüberliegenden Trittplattenunterseite 15 drehbeweglich verbunden, um die Trittplatte 13 zu zentrieren. Letzteres bewirkt insbesondere bei einem lateralen Versatz der Fahrzeugteile 2, 3 zueinander (also parallel zur Durchgangsrichtung 8 und/oder zur Breitenrichtung 10), dass die Trittplatte 13 so positioniert wird, dass ein problemloses Begehen der Brücke 1 weiterhin gewährleistet ist.

Diese drehbeweglichen Verbindungen zwischen Scherengitter 9 und Trittplatte 13 sind im ersten Ausführungsbeispiel jeweils durch ein Radiallager 18 realisiert, welches Radiallager 18 Drehungen um eine normal auf die Trittplattenunterseite 15 stehende Drehachse sowie Translationen in einem gewissen Bereich parallel bzw. entlang zu dieser Drehachse erlaubt.

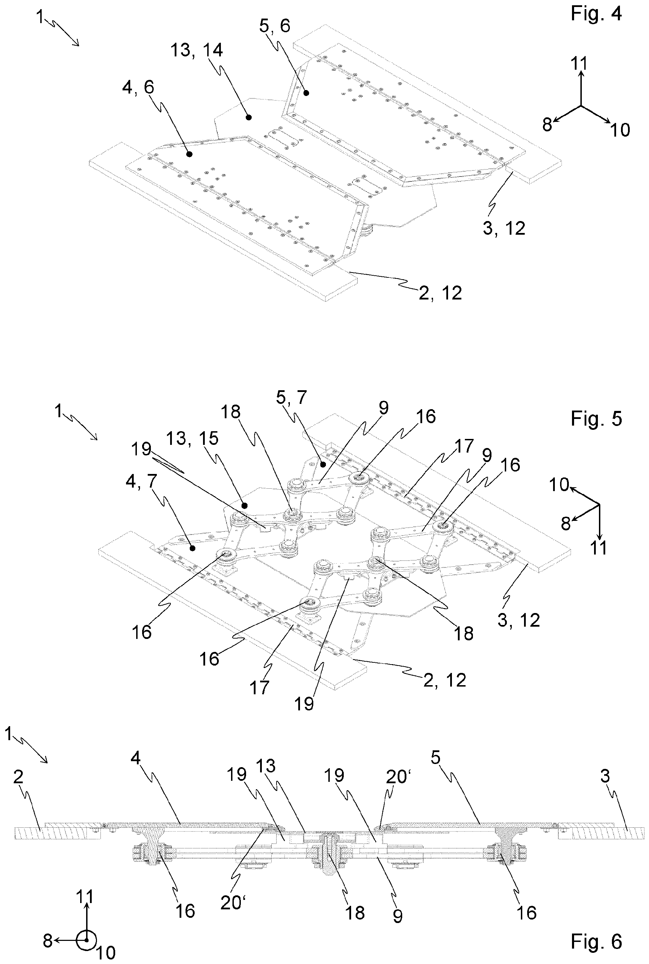

Das in Fig. 4, Fig. 5 und Fig. 6 dargestellte zweite Ausführungsbeispiel der erfindungsgemäßen Brücke 1 ist grundsätzlich exakt wie das erste Ausführungsbeispiel aufgebaut, außer dass die Trittplatte 13 in Höhenrichtung 11 gesehen vor den Bodenplatten 4, 5 angeordnet ist, wobei die Bodenplatten 4, 5 mit Auflageabschnitten 20' auf der Trittplattenoberseite 14 gleitbar aufliegen, vgl. Fig. 6. Die Auflageabschnitte 20` sind zur Verbesserung der Gleiteigenschaften aus einem hierfür geeigneten Kunststoff gefertigt.

Da relativ große Abschnitte der Trittplatte 13 zwischen den Scherengittern 9 und den Bodenplatten 4, 5 liegen, vgl. Fig. 5, kontaktieren die an den Scherengittern 9 montierten Gleitkörper 19 die Trittplattenunterseite 15. D.h. die Trittplattenunterseite 15 liegt gleitbar auf den Gleitkörpern 19 auf, wodurch eine Unterstützung der Trittplatte 13 durch die Scherengitter 9 ermöglicht wird, was die Stabilität bei Begehung der Brücke 1 erhöht.

Ansonsten gilt für das zweite Ausführungsbeispiel identisch das oben zum ersten Ausführungsbeispiel Gesagte, weshalb auf eine Wiederholung verzichtet und auf obige Ausführungen verwiesen wird.

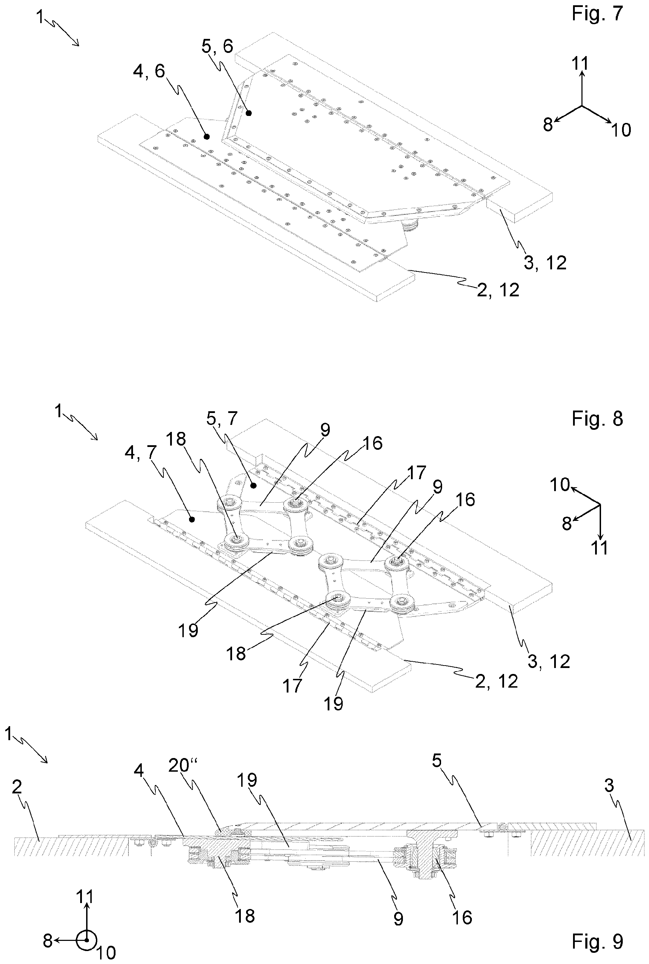

Das in Fig. 7, Fig. 8 und Fig. 9 dargestellte dritte Ausführungsbeispiel der erfindungsgemäßen Brücke 1 unterscheidet sich von den ersten beiden Ausführungsbeispielen darin, dass keine Trittplatte 13 vorgesehen ist. D.h. die Bodenplatten 4, 5 überdecken gemeinsam den Bereich zwischen den beiden Fahrzeugteilen 2, 3.

Im dritten Ausführungsbeispiel ist die zweite Bodenplatte 5 in Höhenrichtung 11 gesehen hinter der ersten Bodenplatte 4 angeordnet, wobei die zweite Bodenplatte 5 mit einem Auflageabschnitt 20" gleitbar auf der Bodenplattenoberseite 6 der ersten Bodenplatte 4 aufliegt. Der Auflageabschnitt 20" ist zur Verbesserung der Gleiteigenschaften aus einem hierfür geeigneten Kunststoff gefertigt.

Zur drehbeweglichen Verbindung der Scherengitter 9 mit der Bodenplattenunterseite 7 der ersten Bodenplatte 4 sind im dritten Ausführungsbeispiel Radiallager 18 vorgesehen, vgl. insbesondere Fig. 9, wobei die Radiallager 18 Drehungen um eine normal auf die Bodenplattenunterseite 7 der ersten Bodenplatte 4 stehende Drehachse sowie Translationen in einem gewissen Bereich parallel bzw. entlang zu dieser Drehachse erlauben.

Die drehbewegliche Verbindung der Scherengitter 9 mit der Bodenplattenunterseite 7 der zweiten Bodenplatte 5 ist wie bei den anderen gezeigten Ausführungsbeispielen durch sphärische Lager 16 realisiert.

Ansonsten gilt für das dritte Ausführungsbeispiel identisch das oben zum ersten Ausführungsbeispiel Gesagte, weshalb auf eine Wiederholung verzichtet und auf obige Ausführungen verwiesen wird.

### BEZUGSZEICHENLISTE

- 1: Brücke
- 2: Erster Fahrzeugteil
- 3: Zweiter Fahrzeugteil
- 4: Erste Bodenplatte
- 5: Zweite Bodenplatte
- 6: Bodenplattenoberseite
- 7: Bodenplattenunterseite
- 8: Durchgangsrichtung
- 9: Scherengitter
- 10: Breitenrichtung
- 11: Höhenrichtung
- 12: Fahrzeugteilstirnseite
- 13: Trittplatte
- 14: Trittplattenoberseite
- 15: Trittplattenunterseite
- 16: Sphärisches Lager
- 17: Scharnier
- 18: Radiallager
- 19: Gleitkörper
- 20, 20', 20": Auflageabschnitt

## Patentansprüche

1. Brücke (1) für einen Übergang zwischen zwei gelenkig miteinander verbundenen Fahrzeugteilen (2, 3), insbesondere eines Schienenfahrzeugs, wobei sich die Brücke (1) in einer Durchgangsrichtung (8) und einer darauf normal stehenden Breitenrichtung (10) erstreckt, die Brücke (1) umfassend zwei Bodenplatten (4, 5), die jeweils zur gelenkigen Anordnung an einer Stirnseite (12) der Fahrzeugteile (2, 3) vorgesehen sind und eine zumindest abschnittsweise begehbare Bodenplattenoberseite (6) aufweisen, wobei in einer Höhenrichtung (11) gesehen vor den Bodenplatten (4, 5) zumindest ein Kopplungselement (9), vorzugsweise zwei Kopplungselemente (9), vorgesehen ist/sind, wobei die Höhenrichtung (11) normal auf die Durchgangsrichtung (8) und die Breitenrichtung (10) steht und von den Bodenplattenoberseiten (6) weg weist, **dadurch gekennzeichnet, dass** das zumindest eine Kopplungselement (9), vorzugsweise die zwei Kopplungselemente (9), drehbeweglich mit den beiden Bodenplatten (4, 5) auf den Bodenplattenoberseiten (6) gegenüberliegenden Bodenplattenunterseiten (7) verbunden ist/sind, um bei einem Versatz der Fahrzeugteile (2, 3) parallel zur Höhenrichtung (11) eine Auslenkung der Bodenplatten (4, 5) zu erzwingen, wobei das zumindest eine Kopplungselement (9) nur indirekt, insbesondere über die Bodenplatten (4, 5), mit den Fahrzeugteilen (2, 3) verbindbar ist.

2. Brücke (1) nach Anspruch 1, **dadurch gekennzeichnet, dass** zur drehbeweglichen Verbindung des mindestens einen Kopplungselements (9) mit zumindest einer der Bodenplatten (4, 5) zumindest ein sphärisches Lager (16) vorgesehen ist.

3. Brücke (1) nach einem der Ansprüche 1 bis 2, **dadurch gekennzeichnet, dass** das mindestens eine Kopplungselement (9) zumindest einen Gleitkörper (19), vorzugsweise aus Kunststoff, aufweist, auf welchem Gleitkörper (19) zumindest eine der Bodenplattenunterseiten (7) gleitbar aufliegt.

4. Brücke (1) nach einem der Ansprüche 1 bis 3, **dadurch gekennzeichnet, dass** die Brücke (1) eine Trittplatte (13) mit einer zumindest abschnittsweise begehbaren Trittplattenoberseite (14) umfasst, wobei parallel zur Höhenrichtung (11) gesehen die Trittplatte (13) zumindest abschnittsweise zwischen den Bodenplatten (4, 5) angeordnet ist, wobei das mindestens eine Kopplungselement (9) zur Zentrierung der Trittplatte (13) drehbeweglich mit der Trittplatte (13) auf einer der Trittplattenoberseite (14) gegenüberliegenden Trittplattenunterseite (15) verbunden ist.

5. Brücke (1) nach Anspruch 4, **dadurch gekennzeichnet, dass** die Trittplatte (13) in Höhenrichtung (11) gesehen vor den Bodenplatten (4, 5) angeordnet ist, wobei die Bodenplatten (4, 5) auf der Trittplattenoberseite (14), insbesondere gleitbar, aufliegen.

6. Brücke (1) nach Anspruch 4, **dadurch gekennzeichnet, dass** die Trittplatte (13) in Höhenrichtung (11) gesehen hinter den Bodenplatten (4, 5) angeordnet ist, wobei die Trittplatte (13) auf den Bodenplattenoberseiten (6), insbesondere gleitbar, aufliegt.

7. Brücke (1) nach einem der Ansprüche 4 bis 6, **dadurch gekennzeichnet, dass** das mindestens eine Kopplungselement (9) mindestens einen Gleitkörper (19), vorzugsweise aus Kunststoff, aufweist, auf welchem Gleitkörper (19) die Trittplattenunterseite (15) gleitbar aufliegt.

8. Brücke (1) nach einem der Ansprüche 1 bis 7, **dadurch gekennzeichnet, dass** das mindestens eine Kopplungselement durch mindestens ein Scherengitter (9) ausgebildet ist.

9. System umfassend einen ersten Fahrzeugteil (2) und einen zweiten Fahrzeugteil (3), wobei die beiden Fahrzeugteile (2, 3) gelenkig miteinander verbunden sind und zwischen den Fahrzeugteilen (2, 3) ein Übergang mit einer Brücke (1) nach einem der Ansprüche 1 bis 8 vorgesehen ist, wobei das mindestens eine Kopplungselement (9) nur indirekt, insbesondere über die Bodenplatten (4, 5), mit den Fahrzeugteilen (2, 3) verbunden ist.

10. System nach Anspruch 9, **dadurch gekennzeichnet, dass** zur gelenkigen Anordnung der Bodenplatten (4, 5) an den Stirnseiten (12) der Fahrzeugteile (2, 3) Scharniere (17) vorgesehen sind.

## Claims

1. Bridge (1) for a transition between two jointedly interconnected vehicle parts (2, 3), in particular of a rail vehicle, wherein the bridge (1) extends in a passage direction (8) and a width direction (10) normal thereto, the bridge (1) comprising two base plates (4, 5) which are each provided for articulated arrangement on an end face (12) of the vehicle parts (2, 3) and have each a base plate upper side (6) which can be walked on at least in sections, wherein at least one coupling element (9), preferably two coupling elements (9), is/are provided in front of the base plates (4, 5) when viewed in a height direction (11), wherein the height direction (11) is normal to the passage direction (8) and the width direction (10) and faces away from the base plate upper sides (6), **characterized in that** the at least one coupling element (9), preferably the two coupling elements (9), is/are rotatably movably connected to the two base plates (4, 5) on base plate lower sides (7) opposite the base plate upper sides (6), in order to force a deflection of the base plates (4, 5) when the vehicle parts (2, 3) are offset parallel to the height direction (11), wherein the at least one coupling element (9) can be connected to the vehicle parts (2, 3) only indirectly, in particular via the base plates (4, 5).

2. Bridge (1) according to claim 1, **characterized in that** at least one spherical bearing (16) is provided for the rotatably movable connection of the at least one coupling element (9) to at least one of the base plates (4, 5).

3. Bridge (1) according to one of claims 1 to 2, **characterized in that** the at least one coupling element has at least one sliding body (19), preferably made of plastic, on which sliding body (19) at least one of the base plate lower sides (7) rests in a sliding manner.

4. Bridge (1) according to one of claims 1 to 3, **characterized in that** the bridge (1) comprises a tread plate (13) with a tread plate upper side (14) that can be walked on at least in sections, wherein the tread plate (13) is arranged at least in sections between the base plates (4, 5) when viewed parallel to the height direction (11), wherein the at least one coupling element (9) for centering the tread plate (13) is connected to the tread plate (13) in a rotatably movable manner on a tread plate lower side (15) opposite the tread plate upper side (14).

5. Bridge (1) according to claim 4, **characterized in that** the tread plate (13) is arranged in front of the base plates (4, 5) when viewed in the height direction (11), wherein the base plates (4, 5) rest on the tread plate upper side (14), in particular in a sliding manner.

6. Bridge (1) according to claim 4, **characterized in that** the tread plate (13) is arranged behind the base plates (4, 5) when viewed in the height direction (11), wherein the tread plate (13) rests on the base plate upper sides (6), in particular in a sliding manner.

7. Bridge (1) according to one of claims 4 to 6, **characterized in that** the at least one coupling element (9) has at least one sliding body (19), preferably made of plastic, on which sliding body (19) the tread plate lower side (15) rests in a sliding manner.

8. Bridge (1) according to one of claims 1 to 7, **characterized in that** the at least one coupling element is formed by at least one scissor grid (9).

9. System comprising a first vehicle part (2) and a second vehicle part (3), wherein the two vehicle parts (2, 3) are jointedly interconnected and a transition with a bridge (1) according to one of claims 1 to 8 is provided between the vehicle parts (2, 3), wherein the at least one coupling element (9) is connected to the vehicle parts (2, 3) only indirectly, in particular via the base plates (4, 5).

10. System according to claim 9, **characterized in that** hinges (17) are provided for the articulated arrangement of the base plates (4, 5) on the end faces (12) of the vehicle parts (2, 3).

## Revendications

1. Pont (1) pour une transition entre deux parties de véhicule (2, 3), en particulier de véhicule ferroviaire, reliées l'une à l'autre de façon articulée, dans lequel le pont (1) s'étend dans un sens de passage (8) et dans un sens de la largeur (10) perpendiculaire à celui-ci, le pont (1) comprenant deux plaques de plancher (4, 5) prévues pour être disposées de façon articulée sur une face d'extrémité (12) des parties de véhicule (2, 3) et présentent une face supérieure des plaques de plancher (6) accessible au moins par zones au passage, dans lequel au moins un élément de couplage (9), de préférence deux éléments de couplage (9) sont prévus, vus dans un sens de la hauteur (11), avant les plaques de plancher (4, 5), le sens de la hauteur (11) étant perpendiculaire au sens de passage (8) et au sens de la largeur (10) et s'éloignant des faces supérieures des plaques de plancher (6), **caractérisé en ce que** l'au moins un élément de couplage (9), de préférence les deux éléments de couplage (9), est ou sont reliés de façon mobile en rotation avec les deux plaques de plancher (4, 5) sur des faces inférieures des plaques de plancher (7) opposées aux faces supérieures des plaques de plancher (6) afin de contraindre à une déviation des plaques de plancher (4, 5) en cas de décalage des parties de véhicule (2, 3) parallèlement au sens de la hauteur (11), l'au moins un élément de couplage (9) ne pouvant être relié qu'indirectement, en particulier par l'intermédiaire des plaques de plancher (4, 5), aux parties de véhicule (2, 3).

2. Pont (1) selon la revendication 1, **caractérisé en ce qu'**au moins un palier sphérique (16) est prévu pour la liaison mobile en rotation de l'au moins un élément de couplage (9) avec au moins une des plaques de plancher (4, 5).

3. Pont (1) selon l'une des revendications 1 à 2, **caractérisé en ce que** l'au moins un élément de couplage (9) comporte au moins une glissière (19), de préférence en plastique, au moins une des faces inférieures des plaques de plancher (7) reposant avec possibilité de glissement sur cette glissière (19).

4. Pont (1) selon l'une des revendications 1 à 3, **caractérisé en ce que** le pont (1) comprend une plaque de passerelle (13) avec une face supérieure de plaque de passerelle (14) accessible au moins en partie au passage, la plaque de passerelle (13) étant disposée, vue parallèlement au sens de la hauteur (11), au moins en partie entre les plaques de plancher (4, 5), l'au moins un élément de couplage (9) étant relié de façon mobile en rotation avec la plaque de passerelle (13), pour le centrage de la plaque de passerelle (13), sur une face inférieure de la plaque de passerelle (15) opposée à la face supérieure de la plaque de passerelle (14).

5. Pont (1) selon la revendication 4, **caractérisé en ce que** la plaque de passerelle (13) est disposée, vue dans le sens de la hauteur (11), avant les plaques de plancher (4, 5), lesquelles plaques de plancher (4, 5) reposent sur la face supérieure de la plaque de passerelle (14), en particulier avec possibilité de glissement.

6. Pont (1) selon la revendication 4, **caractérisé en ce que** la plaque de passerelle (13) est disposée, vue dans le sens de la hauteur (11), derrière les plaques de plancher (4, 5), la plaque de passerelle (13) reposant sur les surfaces supérieures des plaques de plancher (6), en particulier avec possibilité de glissement.

7. Pont (1) selon l'une des revendications 4 à 6, **caractérisé en ce que** l'au moins un élément de couplage (9) comporte au moins une glissière (19), de préférence en plastique, la face inférieure de la plaque de passerelle (15) reposant avec possibilité de glissement sur cette glissière (19).

8. Pont (1) selon l'une des revendications 1 à 7, **caractérisé en ce que** l'au moins un élément de couplage est formé par au moins une grille extensible (9).

9. Système comprenant une première partie de véhicule (2) et une deuxième partie de véhicule (3), dans lequel les deux parties de véhicule (2, 3) sont reliées l'une à l'autre de façon articulée et une transition avec un pont (1) selon l'une des revendications 1 à 8 est prévue entre les parties de véhicule (2, 3), dans lequel l'au moins un élément de couplage (9) n'est relié qu'indirectement, en particulier par l'intermédiaire des plaques de plancher (4, 5), aux parties de véhicule (2, 3).

10. Système selon la revendication 9, **caractérisé en ce que** des charnières (17) sont prévues pour la disposition articulée des plaques de plancher (4, 5) sur les faces d'extrémité (12) des parties de véhicule (2, 3).
